# FASCICULE DE BREVET EUROPEEN

(11) **EP 0 499 551 B1**
(45) Date de publication et mention de la délivrance du brevet: **20.03.1996**
(21) Numéro de dépôt: 92420035.5
(22) Date de dépôt: 30.01.1992
(51) Int. Cl.: F02F 11/00, F16J 15/08

(54) **Joint de culasse pour moteur à combustion interne**
Zylinderkopfdichtung für Brennkraftmaschine
Cylinder head gasket for internal combustion engine

(30) Priorité: 14.02.1991 FR 9102294
(43) Date de publication de la demande: 19.08.1992
(73) Titulaire: CURTY PAYEN S.A., F-69800 Saint-Priest, Rhône (FR)
(72) Inventeur: Genin, Bernard Claude Denis, F-69200 Venissieux (FR); Poquet, Jean-Paul, F-69450 Saint Cyr au Mont d'Or (FR)
(74) Mandataire: Maureau, Philippe

(56) Documents cités:
- EP-A- 0 208 349
- EP-A- 0 230 804
- FR-A- 1 320 696
- FR-A- 2 176 450
- FR-A- 2 253 149

## Description

La présente invention a pour objet un joint de culasse pour moteur à combustion interne équipé d'un joint de culasse par chambre de combustion.

Il est connu, notamment, pour l'équipement d'un moteur de poids lourds de forte cylindrée, de mettre en oeuvre des joints de culasse unitaires, un joint étant prévu pour chaque chambre de combustion, pour réaliser l'étanchéité de celle-ci vis-à-vis du bloc et de la culasse, ainsi que l'étanchéité des passages d'huile et d'eau à proximité de cette chambre. Cela permet, à l'aide d'un même type de joint, d'équiper des moteurs dont la conception est bien évidemment la même, mais qui peuvent posséder un nombre différent de cylindres.

Généralement, un joint de culasse de ce type, comporte une partie principale métallique présentant différentes ouvertures respectivement pour la chambre de combustion, les passages d'huile et d'eau, et pour les vis de fixation, l'étanchéité vis-à-vis de la chambre de combustion étant réalisée par des anneaux de feu constitués par des culots métalliques sertis sur le bord de l'ouverture. La partie métallique est revêtue d'un vernis de surface, et l'étanchéité vis-à-vis des fluides de refroidissement et de lubrification du moteur est réalisée par l'intermédiaire de joints souples en élastomère.

Il résulte de la structure des joints traditionnels, dont la partie métallique possède la même épaisseur sur toute sa surface, qu'il convient de réaliser un serrage généralement par six vis, et que ce serrage, suffisamment important pour réaliser une étanchéité vis-à-vis des gaz de la chambre de combustion, est trop important au niveau des passages de fluide de lubrification et de refroidissement, de telle sorte qu'il se produit un serrage très important et non nécessaire des joints en élastomère prévus autour des orifices concernés. En outre, la partie métallique du joint comprise entre le bloc et la culasse, est soumise à un phénomène dit de "fretting-corrosion", qui se traduit par une détérioration du joint et des plans de joint, culasse et bloc, au fur et à mesure de l'utilisation du moteur.

Le document EP-A-0 230 804 décrit un joint de culasse métallique comportant une âme mince présentant des plis et comportant, à la périphérie de la chambre de combustion, des butées de compensation, formant anneaux de feu, lesdits plis et butées étant de hauteur variable en fonction de la localisation des points de serrage.

Le document EP-A-0 208 349 concerne un joint de culasse correspondant au préambule de la revendication 1 et dont les ouvertures pour le passage des fluides de lubrification et de refroidissement sont entourés de cordons souples en élastomère.

Le but de l'invention est de fournir un joint de culasse qui, remédiant à ces inconvénients, possède une excellente fiabilité, sans risque de détérioration dans le temps, assure une excellente étanchéité, tant vis-à-vis des gaz de la chambre de combustion, que vis-à-vis des fluides de refroidissement et de lubrification, et est serré avec un nombre limité de vis, sans modification des spécifications d'assemblage.

A cet effet, le joint de culasse qu'elle concerne, comprenant une âme métallique, dans laquelle est ménagée une ouverture principale correspondant à la chambre de combustion, associée à des moyens d'étanchéité vis-à-vis de celle-ci, ainsi que des ouvertures pour le passage des fluides de refroidissement et de lubrification entourées de cordons d'étanchéité souples en élastomère, et des ouvertures pour le passage des vis de serrage de la culasse est caractérisé en ce que l'âme présente, d'une part, à la périphérie de la chambre de combustion une zone, dont l'épaisseur, mesurée au niveau de la périphérie même de la chambre de combustion est variable en fonction de la position vis-à-vis de la chambre de combustion et des zones de serrage, cette zone, qui constitue elle-même un anneau de feu, comportant un système de rainure-nervure circulaire dont la nervure présente une épaisseur variable en fonction de la position vis-à-vis de la chambre de combustion et des zones de serrage, et d'autre part, des zones comportant les autres orifices, d'épaisseur inférieure à l'épaisseur minimale de la zone entourant la chambre de combustion de façon à pouvoir être libre entre une culasse et un bloc lorsque le joint est monté.

Selon une forme d'exécution de ce joint de culasse, l'épaisseur de l'âme dans la zone entourant la chambre de combustion est comprise entre environ 1,20 et 1,25 mm, l'épaisseur de la nervure est comprise entre environ 0,15 et 0,30 mm, et l'épaisseur de l'âme dans la zone comportant les ouvertures pour les passages de fluides de refroidissement et de lubrification est de l'ordre de 1 mm.

La zone entourant la chambre de combustion et comportant le système rainure-nervure contitue elle-même l'anneau de feu. Cet anneau de feu à épaisseur évolutive, pour assurer une répartition uniforme de serrage sur la chemise, assure une excellente étanchéité, tout en assurant une moindre déformation de la chemise. Compte tenu des différences d'épaisseur respectivement de la zone entourant la chambre de combustion et de la zone dans laquelle sont ménagées les ouvertures pour le passage des fluides de lubrification et de refroidissement, il est possible de diminuer le serrage total de la culasse sur le bloc, tout en bénéficiant d'une excellente étanchéité au niveau des passages de fluides, sans nécessiter, comme tel est le cas habituellement, d'exercer une pression excessive sur les éléments d'étanchéité aux fluides.

En outre, compte tenu de l'épaisseur réduite de l'âme métallique dans la zone comportant les ouvertures pour le passage des fluides, il n'existe pas de serrage sur cette zone, de telle sorte que le phénomène de "fretting-corrosion" est supprimé.

Enfin, compte tenu de l'optimisation des conditions de serrage et d'étanchéité procurées par la structure de ce joint, il est possible de diminuer le nombre des vis de serrage, et de ramener ce nombre de six à quatre par exemple.

Selon une forme d'exécution de ce joint, possèdant une forme générale rectangulaire, à proximité des deux extrémités duquel, considérées dans le sens de la longueur, sont ménagés les ouvertures de serrage et les ouvertures pour le passage des fluides de lubrification et de refroidissement, la zone de l'âme entourant la chambre de combustion possède une épaisseur maximale dans les parties situées près de l'axe longitudinal, une épaisseur minimale dans les parties situées à proximité d'un axe passant par deux trous de serrage et par le centre de la chambre de combustion, et une épaisseur intermédiaire dans les parties situées à proximité d'un axe transversal.

En outre, l'épaisseur de la nervure est maximale dans les parties situées près de l'axe longitudinal et minimale dans les parties situées à proximité d'un axe passant par deux trous de serrage et par le centre de la chambre de combustion.

Afin de permettre au cordon d'étanchéité souple de disposer d'une déformation rémanente à la compression, et de tenir compte de déformations éventuelles de la culasse, l'épaisseur des cordons souples d'étanchéité entourant les ouvertures de passage des fluides de refroidissement et de lubrification est variable sur la périphérie de ces ouvertures, cette épaisseur étant plus importante du côté de la chambre de combustion que du côté opposé.

Avantageusement, la surépaisseur de chaque cordon d'étanchéité par rapport à l'âme du joint est de l'ordre de 0,67 mm du côté tourné vers la chambre de combustion et de l'ordre de 0,60 mm du côté opposé.

Cette solution permet d'obtenir un taux de compression constant de l'élastomère constitutif des cordons.

De toute façon, l'invention sera bien comprise à l'aide de la description qui suit, en référence au dessin schématique annexé représentant, à titre d'exemple non limitatif, une forme d'exécution de ce joint de culasse :

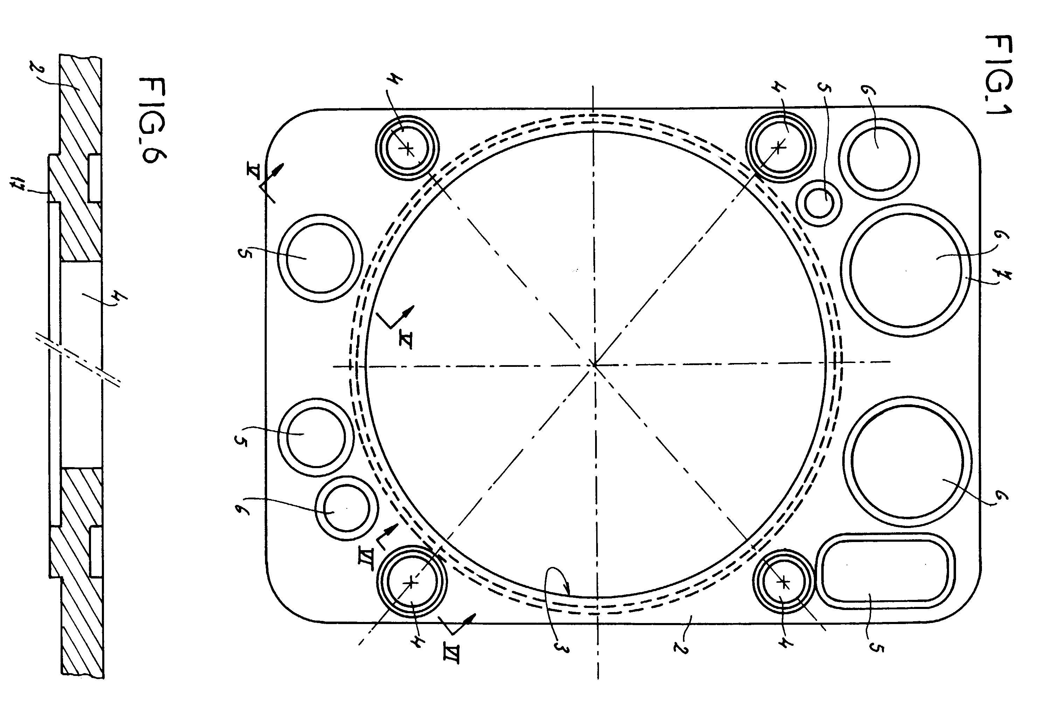

Figure 1 est une vue de dessus de ce joint ;
Figure 2 est une vue très schématique en coupe du montage d'une partie de ce joint entre le bloc moteur d'un véhicule et la culasse de celui-ci ;
Figure 3 est une vue en coupe, partielle et à échelle agrandie, d'une partie de la zone de ce joint située à proximité de la chambre de combustion ;
Figure 4 est une vue à échelle agrandie du profil sur 90 degrés de la zone du joint de figure 3 et de sa nervure ;
Figure 5 est une vue en coupe transversale du joint selon la ligne V-V de figure 1 .
Figure 6 est une vue en coupe transversale du joint selon la ligne VI-VI de figure 1.

Le joint représenté au dessin comprend une âme métallique 2 de forme générale rectangulaire, possèdant une ouverture centrale 3 correspondant à la chambre de combustion. A proximité de ses extrémités considérées dans le sens de la longueur, le joint comporte un certain nombre d'ouvertures dont celles 4 sont destinées au passage de vis de centrage ou de serrage, dont celles 5 sont destinées au passage du liquide de refroidissement du moteur, et dont celles 6 sont destinées au passage du liquide de lubrification. L'étanchéité au niveau des orifices 5 et 6 est réalisée, de façon connue en soi, en surmoulant sur le bord de ces orifices des cordons 7 de consistance souple en matériau élastomère.

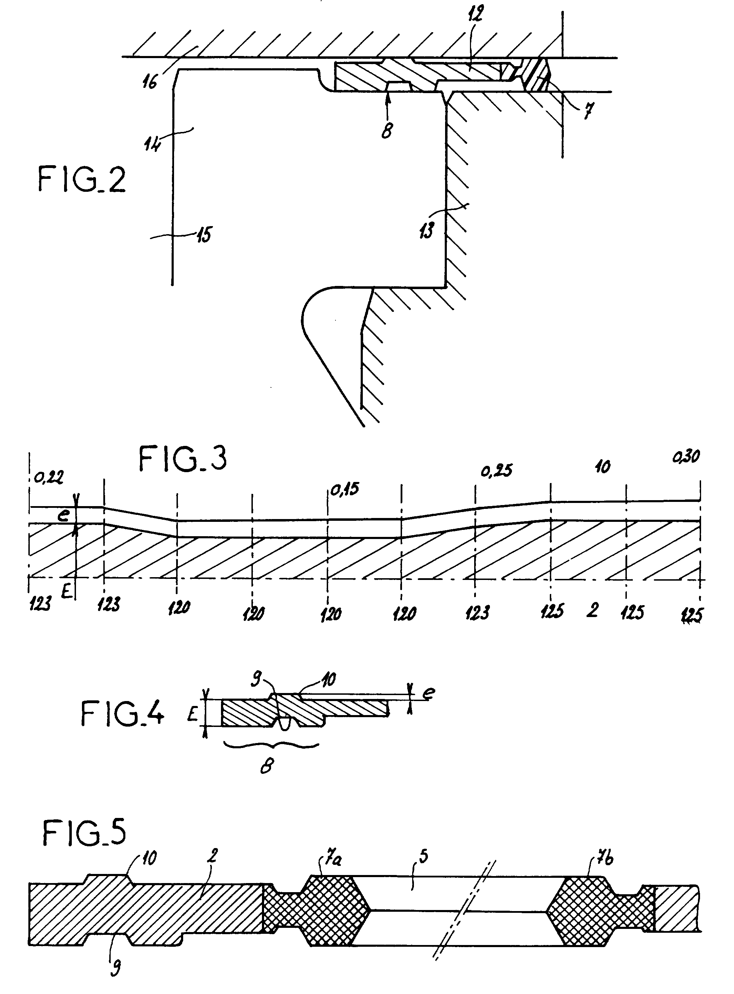

Selon la caractéristique essentielle de l'invention, l'âme du joint présente, à la périphérie de la chambre de combustion, une zone 8 dans laquelle est ménagé un système rainure 9-nervure 10. L'épaisseur E de l'âme dans la zone 8 varie en fonction de la position vis-à-vis de la chambre de combustion et des zones de serrage. La figure 3 montre le profil de variation de cette épaisseur, celle-ci étant maximale à proximité de l'axe longitudinal du joint, représenté à la droite de la figure 3, cette épaisseur étant de 1,25 mm, et minimale, dans la zone diagonale, de l'ordre de 1,20 mm, et possèdant une valeur intermédiaire de l'ordre de 1,23 mm à proximité de l'axe transversal du joint.

La figure 3 représente également la variation d'épaisseur e de la nervure 10, cette épaisseur étant maximale à proximité de l'axe longitudinal, de l'ordre de 0,30 mm, comme montré à droite de la figure 3, et minimale dans les zones proches d'un axe, comme montré à la partie gauche de la figure 3.

Comme montré notamment à la figure 2, la zone de l'âme métallique du joint dans laquelle sont ménagées les ouvertures 4, 5 et 6, possède une épaisseur réduite par rapport à celle de la zone 8. Cette zone, désignée par la référence 12 à la figure 2, possède une épaisseur de l'ordre de 1 mm. Il en résulte, comme montré à la figure 2 dans laquelle le bloc moteur porte la référence 13, la chemise porte la référence 14, la chambre de combustion porte la référence 15 et la culasse porte la référence 16, que la partie 12 de l'âme est montée libre entre le bloc 13 et la culasse 16, de telle sorte qu'elle n'est pas soumise à l'action destructrice connue de "fretting-corrosion".

Il ressort également de la figure 2 que les cordons en élastomère 7 sont d'épaisseur supérieure à l'épaisseur de la zone 12 de l'âme du joint.

Pour obtenir un taux de compression constant de l'élastomère malgré les déformations de la culasse, chaque cordon d'étanchéité 7 possède une épaisseur variable sur sa périphérie, cette épaisseur étant supérieure dans la zone 7a située du côté de la chambre de combustion que dans la zone 7b tournée du côté opposé à la chambre.

A titre d'exemple, l'épaisseur 7a est de l'ordre de 0,67, tandis que l'épaisseur de la zone 7b est de l'ordre de 0,60.

Comme montré à la figure 6, ce joint comporte autour de chaque ouverture 4 destinée au serrage un système rainure-nervure, la nervure 17 étant tournée du côté du bloc, ce système possèdant une capacité de déformation pour absorber un excédent de charge de serrage.

Comme il ressort de ce qui précède, l'invention apporte une grande amélioration à la technique existante en fournissant un joint de culasse de conception simple, dont les variations d'épaisseur peuvent être obtenues au cours d'opérations mécaniques telles qu'un usinage et/ou matriçage, procurant une excellente étanchéité tant au gaz de combustion qu'au fluide de refroidissement et de lubrification, sans fretting-corrosion, et possèdant une excellente fiabilité.

En outre, il est, par sa structure, d'une mise en oeuvre économique puisque le nombre de vis de serrage peut être réduit.

## Revendications

1. Joint de culasse pour moteur à combustion interne équipé d'un joint de culasse par chambre de combustion, comprenant une âme métallique, dans laquelle est ménagée une ouverture principale correspondant à la chambre de combustion, associée à des moyens d'étanchéité vis-à-vis de celle-ci, ainsi que des ouvertures pour le passage des fluides de refroidissement et de lubrification entourées de cordons d'étanchéité souples en élastomère, et des ouvertures pour le passage des vis de serrage de la culasse, caractérisé en ce que l'âme (2) présente, d'une part, à la périphérie de la chambre de combustion une zone (8), dont l'épaisseur (E), mesurée au niveau de la périphérie même de la chambre de combustion est variable en fonction de la position vis-à-vis de la chambre de combustion et des zones de serrage, cette zone, qui constitue elle-même un anneau de feu, comportant un système de rainure-nervure (9-10) circulaire dont la nervure (10) présente une épaisseur (e) variable en fonction de la position vis-à-vis de la chambre de combustion et des zones de serrage, et d'autre part, des zones (12) comportant les autres orifices (4, 5, 6) d'épaisseur inférieure à l'épaisseur minimale de la zone entourant la chambre de combustion de façon à pouvoir être libre entre une culasse et un bloc lorsque le joint est monté.

2. Joint de culasse selon la revendication 1, caractérisé en ce que l'épaisseur (E) de l'âme dans la zone (8) entourant la chambre de combustion est comprise entre environ 1,20 et 1,25 mm.

3. Joint de culasse selon l'une quelconque des revendications 1 et 2, caractérisé en ce que l'épaisseur (e) de la nervure (10) est comprise entre environ 0,15 et 0,30 mm.

4. Joint de culasse selon l'une quelconque des revendications 1 à 3, caractérisé en ce que l'épaisseur de l'âme dans la zone (12) comportant les ouvertures (4, 5, 6) pour les passages de fluides de refroidissement et de lubrification, est de l'ordre de 1 mm.

5. Joint de culasse selon l'une quelconque des revendications 1 à 4, possédant une forme générale rectangulaire, à proximité des deux extrémités duquel, considérées dans le sens de la longueur, sont ménagées les ouvertures de serrage et les ouvertures pour le passage des fluides de lubrification et de refroidissement, caractérisé en ce que la zone (8) de l'âme entourant la chambre de combustion possède une épaisseur maximale dans les parties situées près de l'axe longitudinal, une épaisseur minimale dans les parties situées à proximité d'un axe passant par deux trous de serrage et par le centre de la chambre de combustion et une épaisseur intermédiaire dans les parties situées à proximité d'un axe transversal.

6. Joint de culasse selon la revendication 5, caractérisé en ce que l'épaisseur de la nervure (10) est maximale dans les parties situées près de l'axe longitudinal, intermédiaire dans les parties situées près de l'axe transversal du joint, et minimale dans les zones situées à proximité d'un axe passant par deux trous de serrage et par le centre de la chambre de combustion.

7. Joint de culasse selon l'une quelconque des revendications 1 à 6, caractérisé en ce que l'épaisseur des cordons souples d'étanchéité (7) entourant les ouvertures (5, 6) de passage des fluides de refroidissement et de lubrification est variable sur la périphérie de ces ouvertures, cette épaisseur étant plus importante du côté de la chambre de combustion (15) que du côté opposé.

8. Joint de culasse selon la revendication 7, caractérisé en ce que la surépaisseur de chaque cordon d'étanchéité (7) est de l'ordre de 0,67 mm du côté tourné vers la chambre de combustion et de l'ordre de 0,60 mm du côté opposé.

9. Joint de culasse selon l'une quelconque des revendications 1 à 8, caractérisé en ce que chaque ouverture (4) de serrage est entourée par un système rainure-nervure (17) possédant une capacité de déformation pour absorber un excédent de charge de serrage.

## Patentansprüche

1. Zylinderkopfdichtung für eine Brennkraftmaschine, die mit einer Zylinderkopfdichtung pro Brennraum ausgestattet ist, beinhaltend einen metallischen Kernbereich, in dem eine erste mit dem Brennraum übereinstimmende Öffnung, wobei sich dieser Öffnung benachbart Dichtungsmittel befinden, sowie Öffnungen für den Durchfluß von Kühlflüssigkeit und von Schmiermittel, die von geschmeidigen aus Elastomermaterial bestehenden Dichtungsbändern eingefaßt sind, und Öffnungen für den Durchgang von Zylinderkopfschrauben ausgespart sind, **dadurch gekennzeichnet, daß** der Kernbereich (2) auf der einen Seite, am Rand des Brennraumes, eine Zone (8), deren Dicke (E), gemessen auf den Niveau des Randes des Brennraumes selbst in Abhängigkeit von der Position im Hinblick auf den Brennraum und auf die Befestigungsbereiche gesehen variabel ist, wobei diese Zone, die selbst einen Feuersteg bildet, ein umlaufendes Rillen/Rippensystem besitzt, dessen Rippe eine in Abhängigkeit von der Anordnung im Hinblick auf den Brennraum und im Hinblick auf die Anpreßzonen gesehen variable Dicke besitzt, und auf der anderen Seite Zonen (12), die die anderen Öffnungen (4, 5, 6) beinhalten, mit kleinerer Dicke als der kleinsten Dicke derjenigen Zone, die den Brennraum umgibt, aufweist, wobei sie in der Lage sind, zwischen einem Zylinderkopf und einem Zylinderblock nach der Montage der Dichtung ohne Anlage frei zu sein.

2. Zylinderkopfdichtung nach Anspruch 1, **dadurch gekennzeichnet, daß** die Dicke (E) des Kernbereiches in derjenigen Zone (8), die den Brennraum umgibt, einen Wert zwischen 1,20 und 1,25 mm aufweist.

3. Zylinderkopfdichtung nach einem der Ansprüche 1 und 2, **dadurch gekennzeichnet, daß** die Dicke (e) der Rippe (10) im Bereich von 0,15 und 0,30 mm liegt.

4. Zylinderkopfdichtung gemäß einem der Ansprüche 1 - 3, **dadurch gekennzeichnet, daß** die Dicke des Kembereiches in derjenigen Zone (12), die die Öffnungen (4, 5, 6) für den Durchfluß der Flüssigkeiten zur Kühlung und Schmierung aufweist, den Wert von 1 mm aufweist.

5. Zylinderkopfdichtung nach einem der Ansprüche 1 - 4, mit im wesentlichen rechtwinkliger Form, wobei in Längsrichtung gesehen in der Nähe der beiden Enden die Öffnungen für die Zylinderkopfanpreßschrauben und die Öffnungen für den Durchgang von Schmiermittel und Kühlflüssigkeit ausgespart sind, **dadurch gekennzeichnet, daß** die Zone (8) des Kembereiches, die den Brennraum umgibt, in den Bereichen eine maximale Dicke besitzt, die nahe der Längsachse angeordnet sind, daß die Zone eine kleinste Dicke in denjenigen Teilbereichen, die in der Nähe einer Achse liegen, die von zwei Löchern für Anpreßschrauben und von der Mitte des Brennraumes gekreuzt werden und eine dazwischenliegende Dicke in denjenigen Teilbereichen aufweist, die in der Nähe der Querachse liegen.

6. Zylinderkopfdichtung nach Anspruch 5, **dadurch gekennzeichnet, daß** die Dicke der Rippe (10) in denjenigen Teilbereichen maximal ist, die nahe der Längsachse liegen, daß die Rippe eine mittlere Dicke in denjenigen Teilbereichen besitzt, die nahe der Querachse der Dichtung liegen und daß die Dicke am kleinsten in denjenigen Zonen ist, die in der Nähe eines Achse liegen, die von zwei Löchern für Zylinderkopfanpreßschrauben und durch die Mitte des Brennraumes geschnitten wird.

7. Zylinderkopfdichtung nach einem der Ansprüche 1 - 6, **dadurch gekennzeichnet, daß** die Dicke der geschmeidigen Dichtungsbänder (7), die die Durchflußöffnungen (5, 6) von Kühlflüssigkeit und Schmniermittel umgeben, über den Randbereich dieser Öffnungen gesehen variabel ist, wobei die Dicke an der zum Brennraum (15) hin gerichteten Seite dicker ist als an der entgegengesetzten Seite.

8. Zylinderkopfdichtung nach Anspruch 7, **dadurch gekennzeichnet, daß** der Überwert der Dicke eines jeden Dichtungsbandes (7) an der zum Brennraum gerichteten Seite in der Größe von 0,67 und an der entgegengesetzten Seite in der Größe von 0,60 mm liegt.

9. Zylinderkopfdichtung nach einem der Ansprüche 1 - 8, **dadurch gekennzeichnet, daß** jede Öffnung (4) für die Anpreßverschraubung von einem Rillen/Rippensystem (17) umgeben ist, das zur Absorbierung eines überschießenden Anpreßdruckes eine Verformungsmöglichkeit aufweist.

## Claims

1. Cylinder-head gasket for internal combustion engine equipped with one cylinder-head gasket per combustion chamber, comprising a metallic web, in which a main opening corresponding to the combustion chamber is formed, being associated with means for sealing with respect to the latter, as well as openings for the passage of the cooling and lubricating fluids surrounded by flexible elastomeric sealing strips, and openings for the passage of the cylinder-head clamping screws, characterised in that the web (2) has, on the one hand, at the periphery of the combustion chamber a zone (8), the thickness (E) of which, measured in the region of the said periphery of the combustion chamber, is variable as a function of the position with respect to the combustion chamber and the clamping zones, this zone, which itself constitutes a fire ring, including a circular groove-rib system (9-10), the rib (10) of which has a thickness (e) which is variable as a function of the position with respect to the combustion chamber and the clamping zones, and, on the other hand, zones (12) including the other orifices (4, 5, 6), of lower thickness than the minimum thickness of the zone surrounding the combustion chamber so as to be able to be free between a cylinder head and a block when the gasket is mounted.

2. Cylinder-head gasket according to Claim 1, characterised in that the thickness (E) of the web in the zone (8) surrounding the combustion chamber is between about 1.20 and 1.25 mm.

3. Cylinder-head gasket according to either one of Claims 1 and 2, characterised in that the thickness (e) of the rib (10) is between about 0.15 and 0.30 mm.

4. Cylinder-head gasket according to any one of Claims 1 to 3, characterised in that the thickness of the web in the zone (12) including the openings (4, 5, 6) for the cooling- and lubricating-fluid passages is of the order of 1 mm.

5. Cylinder-head gasket according to any one of Claims 1 to 4, having a rectangular general shape, close to the two ends of which, considered longitudinally, the clamping openings and the openings for the passage of the lubricating and cooling fluids are formed, characterised in that the zone (8) of the web surrounding the combustion chamber has a maximum thickness in the parts situated near the longitudinal axis, a minimum thickness in the parts situated close to an axis passing through two clamping holes and through the centre of the combustion chamber and an intermediate thickness in the parts situated close to a transverse axis.

6. Cylinder-head gasket according to Claim 5, characterised in that the thickness of the rib (10) is at a maximum in the parts situated near the longitudinal axis, intermediate in the parts situated near the transverse axis of the gasket, and at a minimum in the zones situated close to an axis passing through two clamping holes and through the centre of the combustion chamber.

7. Cylinder-head gasket according to any one of Claims 1 to 6, characterised in that the thickness of the flexible sealing strips (7) surrounding the openings (5, 6) for the passage of the cooling and lubricating fluids is variable over the periphery of these openings, this thickness being greater on the side of the combustion chamber (15) than on the opposite side.

8. Cylinder-head gasket according to Claim 7, characterised in that the excess thickness of each sealing strip (7) is of the order of 0.67 mm on the side turned towards the combustion chamber and of the order of 0.60 mm on the opposite side.

9. Cylinder-head gasket according to any one of Claims 1 to 8, characterised in that each clamping opening (4) is surrounded by a groove-rib system (17) possessing a deformation capability in order to absorb an excessive clamping load.
